# EUROPEAN PATENT APPLICATION

(11) **EP 3 460 735 A1**
(43) Date of publication of application: **27.03.2019**
(21) Application number: 17306263.9
(22) Date of filing: 26.09.2017
(51) Int. Cl.: G06Q 20/32, G06F 1/32

(54) **METHOD OF MANAGING A NFC TRANSACTION**

(71) Applicant: GEMALTO SA, 92190 Meudon (FR)
(72) Inventor: COURTIADE, Fabien, 13881 GEMENOS CEDEX (FR); ZAITI, Reda, 13881 GEMENOS CEDEX (FR); BOULARD, Laurent, 13881 GEMENOS Cedex (FR)
(74) Representative: Grevin, Emmanuel

(57) **Abstract**

Method for managing a NFC transaction between a NFC reader and a device including an application and a NFC controller having an ability to communicate in contactless mode which is deactivated. The device includes an indicator uniquely associated with the application. This indicator is set to either a first or a second value. When the NFC controller is awakened by the electromagnetic field generated by the NFC reader, it sends a first message to the application. On receipt of the first message, the application checks the indicator and activates the NFC controller ability to communicate in contactless mode only if the indicator is set to the first value. The NFC transaction is performed through the NFC controller and when the NFC transaction is ended the NFC controller sends a second message to request the application to deactivate the NFC controller ability to communicate in contactless mode.

## Description

### (Field of the invention)

The present invention relates to methods of managing NFC transactions. It relates particularly to methods of securely authorizing the conduct of a NFC transaction.

### (Background of the invention)

The NFC (Near Field Communication) technology is based on the exchanging of data via a magnetic field. A NFC device may work according to a mode called "card emulation mode". In card emulation mode, the NFC device behaves like an existing contactless card. A NFC reader has an antenna which is able to modulate the magnetic field and to provide energy to other NFC devices.

A NFC device working in card emulation mode can communicate with a NFC reader thanks to an inductive coupling in a field frequency equal to 13.56 MHz. In particular, the ISO14443 and ISO18092 standards provide modulation technologies and communication protocols which may be used in NFC domain.

Many smartphones are kind of NFC devices comprising a NFC controller and a secure element or an emulated secure element. The ability of a smart phone to work as a NFC device can be disabled by the user via dedicated settings (i.e. NFC turned OFF at the device level). As a result, no NFC transaction can be conducted by the smartphone. Disabling NFC feature of a smartphone can be done by the user in order to save power or for avoiding unwanted NFC transactions.

Nevertheless, a user may want to use a service provided via a specific NFC application. Manually changing the setting to enable then disable NFC feature of the handset each time the service is needed is not convenient for the user.

There is a need for allowing a NFC transaction to be conducted with a specific NFC application even if the NFC feature has been deactivated on the smart phone.

### (Summary of the Invention)

The invention aims at solving the above mentioned technical problem.

An object of the present invention is a method for managing a NFC transaction between a device and a NFC reader. The device includes a software application and a NFC controller having an ability to communicate in contactless mode which is deactivated. The device includes an indicator uniquely associated with the software application. The indicator is set to either a first or a second value. As soon as the NFC controller is awakened by the electromagnetic field generated by the NFC reader, the NFC controller sends a first message to the software application. On receipt of the first message, the software application checks said indicator and activates the NFC controller ability to communicate in contactless mode only if said indicator is set to the first value. The NFC transaction is performed through the NFC controller and when the NFC transaction is ended the NFC controller sends a second message to request the software application to deactivate the NFC controller ability to communicate in contactless mode.

Advantageously, the device may include an embedded secure element storing a NFC application and the NFC transaction may be performed between the NFC application and the NFC reader.

Advantageously, the device may include a software execution environment in which said software application is installed, the software execution environment may comprise a NFC application and the NFC transaction may be performed between the NFC application and the NFC reader.

Advantageously, the indicator may be set during installation of the software application and any attempt to update the indicator may be denied after the software application installation.

Another object of the invention is a device including a software application and a NFC controller having an ability to communicate in contactless mode which can be deactivated. The device includes an indicator which is uniquely associated with the software application. The indicator is set to either a first or a second value. The NFC controller is configured to send a first message to the software application as soon as the NFC controller is awakened by the electromagnetic field generated by a NFC reader. The software application is configured to check said indicator on receipt of the first message and to activate the NFC controller ability to communicate in contactless mode only if said indicator is set to the first value. The NFC controller is configured to send a second message to request the software application to deactivate the NFC controller ability to communicate in contactless mode when the NFC transaction is ended.

Advantageously, the NFC controller may be configured to send said first message as an interrupt.

Advantageously, the device may include an embedded secure element storing a NFC application and the NFC transaction may be performed between the NFC application and the NFC reader.

Advantageously, the device may include a software execution environment in which said software application is installed. The software execution environment may comprise a NFC application and the NFC transaction may be performed between the NFC application and the NFC reader.

Advantageously, the indicator may be set during installation of the software application and the device may be configured to deny any attempt to update the indicator once the software application has been installed.

Advantageously, the device may be a mobile phone, an electronic ring, a connected watch, a tablet, a gaming machine, a Personal Digital Assistant or an electronic device embedded in a Computer.

### (Brief description of the drawings)

Other characteristics and advantages of the present invention will emerge more clearly from a reading of the following description of a number of preferred embodiments of the invention with reference to the corresponding accompanying drawings in which:
- Figure 1 depicts schematically an example of a system comprising a NFC reader and a NFC device according to a first embodiment of the invention;
- Figure 2 shows a flow chart of the installation of a software application according to an example of the invention;
- Figure 3 shows a flow chart of the management of a NFC transaction according to an example of the invention; and
- Figure 4 depicts schematically an example of a system comprising a NFC reader and a NFC device according to a second embodiment of the invention.

### (Detailed description of the preferred embodiments)

A NFC controller is a hardware module also named ContactLess Front-end chip or Contactless Frontend (CLF). Typically, a Contactless Frontend is a circuitry which handles the analogue part of the contactless communication, handles the communication protocol layers of the contactless transmission link and exchanges data with a Universal Integrated Circuit Card (UICC) or a secure element.

A NFC device comprises at least one NFC controller.

The invention applies to any kind of NFC equipment intended to carry out a NFC transaction with a NFC reader. For example, it applies to a terminal equipment or portable devices like mobile phones, tablets, connected watches, personal computers, electronic rings, gaming machines, Personal Digital Assistants (PDA) or Electronic Funds Transfer Terminals for payment. It may apply to a device or a box embedded in computer.

In this document when an action is said to be performed by a device, it is in fact executed by a processor located in this device and controlled by instruction codes recorded in a memory of this device.

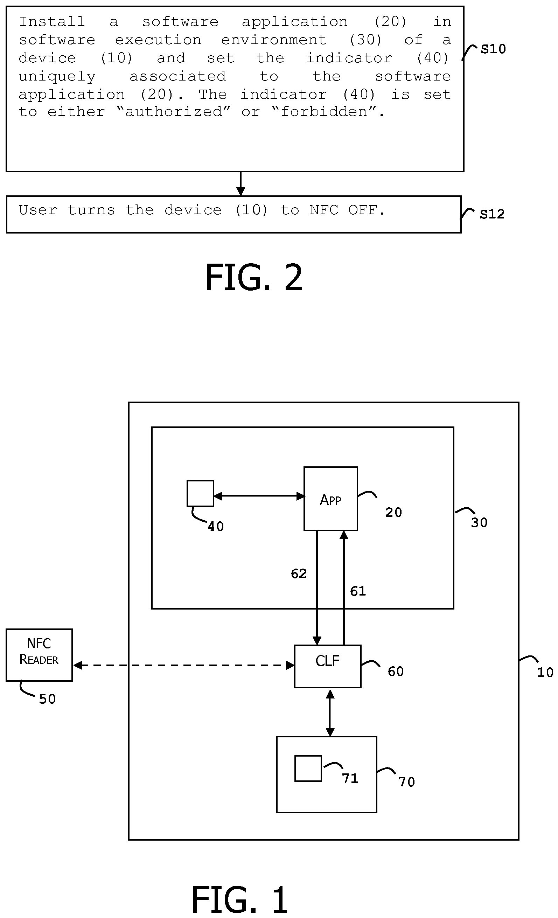

**Figure 1** shows an example of a system comprising a NFC reader 50 and a NFC device 10 according to a first embodiment of the invention.

The NFC device 10 may be a Mobile phone equipped with a NFC controller 60 connected to both an antenna (not shown) and a secure element 70. The ability to communicate in contactless mode of the NFC controller 60 can be activated and deactivated.

The secure element 70 comprises an NFC application 71 able to conduct a NFC transaction with the NFC reader 50. For instance, the NFC application 71 may provide a payment service, access to a specific area or access to a transport network.

In a preferred embodiment, the secure element 70 is an embedded secure element (eSE) comprising a processor, a non-volatile memory and an operating system.

Alternatively, the secure element 70 may be a Secure Digital (SD) card, a miniSD card, a microSD card, an embedded Universal Integrated Circuit Card (eUICC), a smart card or an integrated secure element (iSE) .

The NFC controller 60 and the secure element 70 are linked by a direct single wire link which allows a communication in contact mode between the NFC controller 60 and the secure element 70. In a preferred embodiment, both the NFC controller 60 and the secure element 70 use the Single Wire protocol (SWP) as defined by ETSI TS 102.613.

The NFC device 10 comprises a software execution environment 30 which may be supported by an Application Processor (AP) allowing to run both the operating system and software applications for example. The software execution environment 30 may comprises both a Rich Execution Environment (REE) and a Trusted Execution Environment (TEE) as defined by Global Platform Device Technology - TEE System Architecture GPD_SPE_009 standard.

A software application 20 has been installed in the software execution environment 30. During the installation of the software application 20, an indicator 40 - uniquely associated with the software application 20 - has been recorded in the software execution environment 30.

The indicator 40 can be defined by the end-user as a dedicated parameter managed by the software execution environment 30.

Alternatively the indicator 40 can be defined in the software execution environment 30 before installation of software application 20.

In a preferred embodiment, the software application 20 is a wallet able to manage several other applications.

The indicator 40 is set to either a first value (ex: "authorized") or a second value (ex: "forbidden"). These values can be implemented with any symbol/digit/alphabetic/numeral data provided that the indicator 40 can be set to only two values.

The NFC controller 60 is configured to send a first message 61 to the software application 20 as soon as the NFC controller 60 is awakened by the electromagnetic field generated by a NFC reader 50. It is to be noted that when the NFC feature is set to OFF on the NFC device 10, the electromagnetic field generated by the NFC reader 50 provides energy to the NFC controller 60 and wakes up the NFC controller 60.

The link between the software application 20 and the NFC application 71 may be implemented via the Contactless Registry Service (CRS) as defined by GlobalPlatform Card Specification V2.2 - Amendment C version 1.1.1 for example.

The NFC controller 60 asks for activation of the NFC feature of the device 10. Then the NFC feature of the device 10 is turned ON if and only if the indicator 40 contains the first value (ex: "authorized").

The message 61 is used to notify the software application 20 that the NFC feature of the device 10 shall be forced to ON if the indicator is set to the first value (ex: "authorized").

The message 61 can be an interrupt conveyed through a General Purpose Input/Output (GPIO) connected to the Application Processor (AP). The interrupt targets the software application 20. Alternatively any physical interface connected to both the NFC controller 60 and the AP can be used.

Preferably, the message 61 is sent by the NFC controller 60 only if the NFC feature of the device 10 has been turned OFF.

Preferably, the NFC controller 60 is agnostic to the indicator 40 content. The NFC controller 60 sends the message 61 whatever the setting selected by the user for the indicator 40. It is the software application 20 which is in charge of triggering activation (or not) of NFC feature of the device 10 according to the content of the indicator 40.

The NFC controller 60 is also configured to send a second message 62 to request the software application 20 to deactivate the NFC controller ability to communicate in contactless mode when a NFC transaction is ended (i.e. either has been completed or aborted).

For example, the NFC controller 60 may receive a specific event from the secure element 70 notifying the end of the NFC transaction as defined at §10.2.4.2 of the ETSI TS 102 622 V13.0.0 (2016-10). Upon receipt of this specific event, the NFC controller 60 sends the second message 62.

The second message 62 can be conveyed through any communication channel usually available between a CLF and a software application. At this time, the NFC controller 60 is able to communicate in the usual way with the software application 20 since the NFC feature has been reactivated on the device 10.

The second message 62 is sent by the CLF only if the first message 61 has been sent before the last NFC transaction. The NFC controller 60 manages its own context by tracking message sending.

The software application 20 is designed to check the content of the indicator 40 on receipt of the first message 61 and to request the activation of the NFC controller 60 ability to communicate in contactless mode only if the indicator 40 is set to the first value (ex: "authorized").

The software application 20 is also designed to request the disabling of the NFC controller 60 ability to communicate in contactless mode (i.e. turn OFF NFC feature of the device 10) on receipt of the second message 62.

It is to be noted that the software application 20 has the right to trigger activation and deactivation of NFC controller 60 ability to communicate in contactless mode. Preferably, the indicator 40 is set during the installation of the software application 20 and cannot be updated after. Alternatively, the updating of the indicator 40 may be allowed only to set its content to the second value (ex: "forbidden").

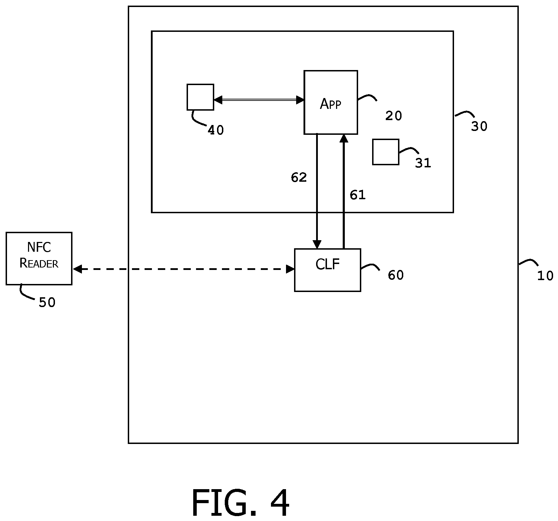

**Figure 4** shows an example of a system comprising a NFC reader 50 and a NFC device 10 according to a second embodiment of the invention.

The NFC device 10 is similar to the one of Figure 1, with the following differences. The device 10 does not include a secure element (nevertheless it includes a UICC or equivalent in the case of a phone). The NFC device 10 comprises an NFC application 31 able to conduct a NFC transaction with the NFC reader 50. For instance, the NFC application 31 may provide a reading of NFC tags, loyalty service, payment service, building access or transport access.

In another embodiment, the software application 20 and the NFC application 31 may be merged in a single application.

**Figure 2** shows a flow chart of the installation of the software application 20 according to an example of the invention.

In this example, the software application 20 is installed on the NFC device 10 of Figure 1.

At step S10, the software application 20 is installed in the software execution environment 30 of the device 10. During this installation phase, the indicator 40 is created and set to a first value (ex: "authorized"). This first value means that the software application 20 is allowed to "force NFC transaction" even if NFC feature has been turned OFF on the device 10. The indicator 40 is uniquely associated to the application 20.

The software application 20 may access the indicator 40 thanks to data provided by the REE or through a dedicated flag handling the indicator 40.

Alternatively, the indicator 40 may be set during an additional mandatory step after the installation of the software application.

In all cases, once the indicator has been set, any further attempts to update the indicator is denied.

At step S12, the user of the NFC device 10, turns the NFC feature of the device 10 OFF. This may be done through the general settings of the NFC device 10.

Of course, the NFC feature of the device 10 may have been deactivated before the installation of the software application 20.

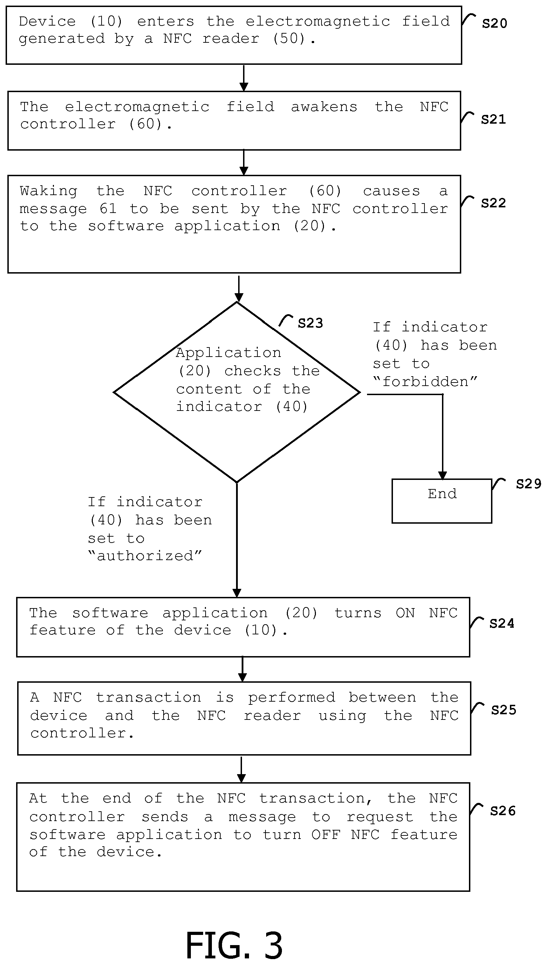

**Figure 3** shows a flow chart of the management of a NFC transaction according to an example of the invention.

This example is based on the NFC device 10 of Figure 1 and assumes that the steps described at Figure 2 have been carried out.

At step S20, the users approaches his device 10 from the NFC reader 50. By doing this gesture, the user accepts that a NFC transaction is performed. Hence the NFC device 10 enters the electromagnetic field generated by the NFC reader 50.

The NFC controller 60 is woken by the electromagnetic field of the NFC reader 50 at step S21.

The waking of the NFC controller 60 causes a first message 61 (an interruption for instance) to be sent by the NFC controller 60 to the software application 20 at step S22.

On receipt of the first message 61, the software application 20 checks the content of the indicator 40 at step S23.

If the indicator 40 has been set to the second value (ex: "forbidden"), the process is stopped. (Step S29) .

If the indicator 40 has been set to the first value (ex: "authorized"), the process continues to step S24 where the software application 20 turns ON the NFC feature of the device 10. For instance, the software application 20 can call a NFC ON service provided by the operating system of the device 10.

At this time, the NFC feature of the device 10 has been activated and a NFC transaction can be carried out through the NFC controller 60.

In a usual way, a NFC transaction is performed between the device 10 and the reader 50 using the CLF 60 at step S25. In this example, the NFC transaction is conducted between the reader 50 and the NFC application 71.

Once the NFC controller 60 has detected the end of the NFC transaction, it sends a second message 62 to request the software application 20 to turn OFF the NFC feature of the device 10. On receipt of the second message 62 the software application 20 deactivates the NFC feature of the device 10. For instance, the software application 20 can call a NFC OFF service provided by the operating system of the device 10.

At this time, the device 10 is in a state similar to the beginning of the process of Figure 3: NFC feature is disabled for the device 10. In other words, the ability to communicate in contactless mode of the NFC controller 60 is deactivated.

The invention allows to prevent unauthorized NFC transactions by coming back to the initial state of NFC settings of the NFC device just after the end of the authorized NFC transaction.

Thanks to the invention the user keeps control of authorized NFC transactions for his own NFC device.

Since the invention is managed at the software application level, it remains independent of the operating system of the NFC device.

Thanks to the invention, a possible NFC transaction really wanted by the user can be done automatically whatever the status of the device NFC feature. (I.e. NFC ON or NFC OFF)

The invention is not restricted to NFC devices comprising a single NFC application. When several NFC application are embedded in a NFC device, the software application 20 may be in charge of selecting one NFC application to conduct the NFC transaction according to predefined rules: type of transaction (e.g. transport, payment, or access), current date/time or current location for example.

It must be understood, within the scope of the invention, that the above-described embodiments are provided as non-limitative examples.

The invention is not limited to the described embodiments or examples. In particular, the features described in the presented embodiments and examples may be combined.

The architecture of the NFC device 10 shown at Figure 1 & 4 is provided as examples only. These architectures may be different.

## Claims

1. A method for managing a NFC transaction between a device (10) and a NFC reader (50), said device including a software application (20) and a NFC controller (60) having an ability to communicate in contactless mode which is deactivated,
**characterized in that** said device includes an indicator (40) uniquely associated with the software application, said indicator being set to either a first or a second value,
**in that** as soon as the NFC controller is awakened by the electromagnetic field generated by the NFC reader, the NFC controller sends a first message (61) to the software application,
**in that** on receipt of the first message, the software application checks said indicator and activates the NFC controller ability to communicate in contactless mode only if said indicator is set to said first value, and
**in that** the NFC transaction is performed through the NFC controller and when the NFC transaction is ended the NFC controller sends a second message (62) to request the software application to deactivate the NFC controller ability to communicate in contactless mode.

2. The method according to claim 1, wherein said device includes an embedded secure element (70) storing a NFC application (71) and wherein the NFC transaction is performed between the NFC application (71) and the NFC reader.

3. The method according to claim 1, wherein said device includes a software execution environment (30) in which said software application (20) is installed, wherein the software execution environment comprises a NFC application (31) and wherein the NFC transaction is performed between the NFC application (31) and the NFC reader.

4. The method according to claim 1, wherein said indicator is set during installation of the software application and wherein any attempt to update the indicator is denied after the software application installation.

5. A device (10) including a software application (20) and a NFC controller (60) having an ability to communicate in contactless mode which can be deactivated,
**characterized in that** said device includes an indicator (40) uniquely associated with the software application, said indicator being set to either a first or a second value,
**in that** the NFC controller is configured to send a first message (61) to the software application as soon as the NFC controller is awakened by the electromagnetic field generated by a NFC reader (50),
**in that** the software application is configured to check said indicator on receipt of the first message and to activate the NFC controller ability to communicate in contactless mode only if said indicator is set to said first value, and
**in that** the NFC controller is configured to send a second message (62) to request the software application to deactivate the NFC controller ability to communicate in contactless mode when the NFC transaction is ended.

6. The device according to claim 5, wherein the NFC controller is configured to send said first message (61) as an interrupt.

7. The device according to claim 5, wherein said device includes an embedded secure element (70) storing a NFC application (71) and wherein the NFC transaction is performed between the NFC application (71) and the NFC reader.

8. The device according to claim 5, wherein said device includes a software execution environment (30) in which said software application (20) is installed, wherein the software execution environment comprises a NFC application (31) and wherein the NFC transaction is performed between the NFC application (31) and the NFC reader.

9. The device according to claim 5, wherein said indicator is set during installation of the software application and wherein the device is configured to deny any attempt to update the indicator once the software application has been installed.

10. The device according to claim 5, wherein the device is a mobile phone, an electronic ring, a connected watch, a tablet, a gaming machine, a Personal Digital Assistant or an electronic device embedded in a Computer.
